# EUROPÄISCHE PATENTSCHRIFT

(11) **EP 0 569 403 B1**
(45) Veröffentlichungstag und Bekanntmachung des Hinweises auf die Patenterteilung: **07.06.1995**
(21) Anmeldenummer: 92903146.6
(22) Anmeldetag: 29.01.1992
(51) Int. Cl.: B01J 35/04, F01N 3/28

(54) **WABENKÖRPER MIT MEHREREN, GEGENEINANDER ABGESTÜTZTEN SCHEIBEN**
HONEYCOMB BODY WITH A PLURALITY OF MUTUALLY SUPPORTED DISCS
CORPS EN NID D'ABEILLES AYANT UNE PLURALITE DE DISQUES APPUYES LES UNS SUR LES AUTRES

(30) Priorität: 31.01.1991 DE 4102890; 10.04.1991 DE 4111712; 08.11.1991 DE 9113928 U
(43) Veröffentlichungstag der Anmeldung: 18.11.1993
(73) Patentinhaber: Emitec Gesellschaft für Emissionstechnologie mbH, 53797 Lohmar (DE)
(72) Erfinder: BREUER, Hans-Jürgen, D-5063 Overath 7 (DE); BRÜCK, Rolf, D-5060 Bergisch Gladbach 1 (DE); SWARS, Helmut, D-5060 Bergisch Galdbach 1 (DE)
(74) Vertreter: Kahlhöfer, Hermann, Dipl.-Phys.
(86) Internationale Anmeldenummer: EP9200191
(87) Internationale Veröffentlichungsnummer: WO9213636

(56) Entgegenhaltungen:
- EP-A- 0 304 776
- WO-A-89/10470
- DE-U- 8 900 168
- US-A- 3 887 741

## Beschreibung

Die Erfindung betrifft einen Wabenkörper, der entlang einer Achse von einem Fluid durchströmbar ist, indem das Fluid eine Vielzahl von Kanälen in dem Wabenkörper durchströmt.

Derartige Wabenkörper finden vielfältige Verwendung als Trägerkörper für Katalysatoren, die zur katalysierten Umsetzung reagibler Bestandteile von Fluiden bestimmt sind. Ein bedeutsames Anwendungsgebiet für Wabenkörper mit Katalysatoren ist die katalysierte Reinigung von Abgasen aus Brennkraftmaschinen, insbesondere aus Brennkraftmaschinen in Kraftfahrzeugen. Hierzu werden katalytisch beschichtete Wabenkörper in den Abgassystemen der Brennkraftmaschinen installiert und von den beim Betrieb der Brennkraftmaschinen anfallenden Abgasen durchströmt.

Die Wabenkörper werden hergestellt aus keramischen Massen oder aus Metallblechen. Zur Bildung eines metallischen Wabenkörpers werden Lagen aus zumindest teilweise gewellten, gefalteten oder ähnlich strukturierten Blechen geschichtet, gestapelt, spiralig gewunden oder auf andere Weise verschlungen. Möglichkeiten hierzu sind in den Patentschriften EP 0 223 058 B1, EP 0 245 736 B1, EP 0 245 737 B1, EP 0 245 738 B1, US-PS 4,753,981 und US-PS 4,822,766, den Veröffentlichungen WO 89/10470 A1, WO 89/10471 A1, WO 90/03220 A1, WO 90/12951 A1 und DE 39 03 879 A1 sowie in dem deutschen Gebrauchsmuster DE 89 08 738 U1 beschrieben.

Katalysatoren zur Umsetzung reagibler Bestandteile eines sie umströmenden Fluides entfalten ihre katalytische Wirkung üblicherweise erst oberhalb bestimmter, für den jeweiligen Katalysator und die zu katalysierende Reaktion spezifischer Grenztemperaturen, den sogenannten "Anspringtemperaturen". Für Katalysatoren zur Umsetzung von Schadstoffen in Abgasen üblicher Brennkraftmaschinen liegen die Anspringtemperaturen im allgemeinen bei einigen hundert Grad Celsius. Mithin muß ein solcher Katalysator aufgeheizt werden, wenn er aktiv werden soll. Im Abgassystem eines Kraftfahrzeuges erfolgt dies in der Regel durch das den mit dem Katalysator beschichteten Wabenkörper durchströmende Abgas, wodurch allerdings die katalytische Wirkung erst mit einer gewissen Verzögerung ab Inbetriebnahme der Brennkraftmaschine einsetzt. Zur Behebung oder Reduzierung dieser Verzögerung ist bereits eine elektrische Vorheizung des Katalysators bzw. des diesen tragenden Wabenkörpers bekannt; entsprechende Hinweise sind den Schriften WO 89/10470 A1, WO 89/10471 A1, WO 90/03220 A1, WO 90/12951 A1, DE 39 03 879 A1 und DE 89 08 738 U1 entnehmbar. Die den metallischen Wabenkörper bildenden Lagen sind elektrisch so untereinander verbunden, daß ein Pfad zur Führung eines elektrischen Stromes durch den Wabenkörper gebildet ist; weiterhin sind an dem Wabenkörper Stromzuführungen angebracht, an denen über entsprechende Schalteinrichtungen und Leitungen eine elektrische Stromquelle, beispielsweise eine Kraftfahrzeugbatterie, anzuschließen ist. Ein Wabenkörper üblicher Größe und Bauart zur Verwendung im Abgassystem eines Kraftfahrzeuges erfordert zur Aufheizung in hinreichend kurzer Zeit eine Heizleistung von mehreren hundert Watt bis über vier Kilowatt; entsprechend hätte ein Bordnetz mit einer Spannung von 12 Volt, wie üblich in Personen-Kraftfahrzeugen, Ströme bis zu etwa 400 A zur Beheizung des Wabenkörpers zu liefern. Der elektrische Widerstand des Wabenkörpers muß einen Wert haben, der der zur Verfügung stehenden elektrischen Spannung und der aufzubringenden Heizleistung entspricht. Metallische Wabenkörper üblicher Art haben allerdings elektrische Widerstände von maximal einigen tausendstel Ohm; aus einer elektrischen Spannungsquelle mit einer Spannung von etwa 12 Volt zöge ein solcher Wabenkörper Ströme bis über 1000 A, wodurch eine übliche Kraftfahrzeug-Batterie in kaum zuträglichem Maße belastet würde. Aus den zitierten Dokumenten zum Stand der Technik sind bereits Maßnahmen bekannt, den elektrischen Widerstand eines Wabenkörpers bei gegebenen geometrischen Abmessungen zu erhöhen. So können elektrisch beheizbare Wabenkörper durch Spalte und/oder elektrisch isolierende Zwischenschichten zwischen den Lagen so unterteilt werden, daß sich ein durch den Wabenkörper verlaufender Strompfad mit einem elektrischen Widerstand in angemessener Höhe ergibt. Auch ist bereits angeregt worden, statt eines einzigen Wabenkörpers mit Katalysatorbeschichtung zwei Wabenkörper zu verwenden, wobei ein elektrisch beheizbarer kleinerer Wabenkörper einem nicht unmittelbar zu beheizenden größeren Wabenkörper vorgeschaltet ist und beide Wabenkörper im wesentlichen gleiche Durchmesser aufweisen, der kleinere Wabenkörper allerdings wesentlich kürzer als der größere Wabenkörper ist. Schon aufgrund der Dimensionierung kann an dem kleineren Wabenkörper ein bedeutend größerer elektrischer Widerstand als an dem größeren Wabenkörper realisiert werden; insbesondere kann der kleinere Wabenkörper so ausgelegt werden, daß er bei begrenzter Belastung einer Spannungsquelle ausreichend schnell auf eine Temperatur oberhalb der Anspringtemperatur des auf dem Wabenkörper befindlichen Katalysators gebracht werden kann. Die in dem den kleineren Wabenkörper durchströmenden Abgas einsetzende, üblicherweise exotherme katalysierte Reaktion führt zu einer Aufheizung des Abgases und unterstützt damit die Aufheizung des größeren Wabenkörpers, der schließlich die Hauptlast der katalysierten Umsetzung übernimmt. Gemäß der DE 89 08 738 U1 können die zur Herstellung eines elektrisch beheizbaren Wabenkörpers vorgesehenen Bleche mit Löchern versehen werden, um deren spezifischen Widerstand zu steigern und einen Wabenkörper mit relativ hohem elektrischem Widerstand zu erhalten. Die WO 90/12951 A1 zeigt Möglichkeiten für mechanisch belastbare Isolierungen in Wabenkörpern auf.

Die beschriebene Anordnung mit einem kleineren Wabenkörper und einem größeren Wabenkörper, wobei der kleinere Wabenkörper in dem Abgassystem vor dem größeren Wabenkörper angeordnet ist, ist auch ohne das Vorsehen einer besonderen Heizung von Vorteil. Der kleinere Wabenkörper hat naturgemäß eine geringere Wärmekapazität als der größere Wabenkörper und wärmt sich daher relativ schnell auf, wenn ihn ein heißes Fluid, z. B. Abgas, durchströmt. Damit kommt in dem kleineren Wabenkörper auch eine katalysierte Reaktion schnell in Gang und unterstützt mit der freiwerdenden Wärme die Aufheizung des größeren Wabenkörpers.

Sowohl die Erwägungen zur elektrischen Beheizung des kleineren Wabenkörpers als auch die Erwägungen zur Bemessung seiner Wärmekapazität führen dazu, die Masse des kleineren Wabenkörpers gering zu halten, natürlich unter der Nebenbedingung, daß der kleinere Wabenkörper nach der Aktivierung des auf ihm befindlichen Katalysators eine hinreichende Aufheizung des ihn durchströmenden Fluides liefert und die Aufheizung des größeren Wabenkörpers unterstützt. Auch in Anbetracht dieser Nebenbedingung können die Erwägungen jedoch möglicherweise den Anforderungen an die mechanische Stabilität des kleineren Wabenkörpers entgegen laufen: Insbesondere im Abgassystem eines Kraftfahrzeuges treten starke Pulsationen auf und die Wabenkörper sind erheblichen mechanischen Beanspruchungen ausgesetzt, weshalb an ihre Festigkeit hohe Anforderungen zu stellen sind.

Aus der DE-U 89 14 079 ist eine Abgasreinigungsvorrichtung bekannt geworden, bei der ein Wabenkörper gewickelt aus einem ebenen und einem gewellten Metallblechband an seiner Außenwand umlaufende Vertiefungen aufweist. Dabei sind im Bereich der gegenüberliegenden Enden des Wabenkörpers keine Vertiefungen vorgesehen. Die Vertiefungen sind so gestaltet, daß der Wabenkörper an diesen Stellen ein den Wabenkörper aufnehmendes Gehäuse nicht berührt.

Die vorliegende Erfindung basiert auf der Aufgabe, einen Wabenkörper anzugeben, bei dem die Möglichkeiten der Anordnung von mehreren Scheiben ausschöpfbar sind, aber insbesondere die erwähnten Festigkeitsprobleme nicht auftauchen; insbesondere soll eine wesentlich größere Gestaltungsfreiheit, speziell im Hinblick auf die Optimierung des Aufwärmverhaltens mit oder ohne elektrische Beheizung, erschlossen werden.

Die erfindungsgemäße Lösung dieses Problems ist ein Wabenkörper, der
a) entlang einer Achse von einem Fluid durchströmbar ist, wobei das Fluid eine Vielzahl von Kanälen in dem Wabenkörper durchströmt;
b) zumindest zwei Scheiben aufweist, die voneinander beabstandet und bezüglich der Achse hintereinander angeordnet sind, und deren jede Kanäle hat, wobei die erste vom Fluid durchströmte Scheibe eine geringere Wärmekapazität aufweist als die nachfolgende Scheibe;
c) zumindest eine nahe der Achse angeordnete Stütze aufweist, durch die die Scheiben untereinander verbunden sind.

Erfindungsgemäß sind die Scheiben des Wabenkörpers durch zumindest eine nahe der Achse angeordnete Stütze, oder eine Anordnung aus mehreren solcher Stützen, gegeneinander abgestützt; die Verbindung der Scheiben untereinander vermag die mechanische Belastbarkeit des Wabenkörpers wesentlich zu vergrößern, da die Scheiben des Wabenkörpers mechanische Beanspruchungen zusammenwirkend auffangen.

Der Wabenkörper nach der Erfindung ist günstigerweiese bezüglich der Achse etwa axialsymmetrisch, insbesondere rotationssymmetrisch ausgelegt, und vorteilhafterweise ist jede Scheibe durch zwei etwa senkrecht zu der Achse ausgerichtete Stirnflächen begrenzt. Diese Maßnahmen kommen sowohl einzeln als auch in Kombination der rationellen Fertigung und Weiterverwendung des Wabenkörpers entgegen.

Besonders vorteilhaft ist es, bei dem Wabenkörper eine erste Scheibe und eine zweite Scheibe vorzusehen, wobei die erste Scheibe parallel zu der Achse eine Dicke hat, die geringer, vorzugsweise wesentlich geringer, als die parallel zur Achse bestimmte Dicke der zweiten Scheibe ist. Erfindungsgemäß wird die erste Scheibe über die zumindest eine Stütze von der zweiten Scheibe gestützt, so daß die erste Scheibe weitestgehend allein im Hinblick auf geringe Wärmekapazität und einen elektrischen Widerstand in vorgegebener Höhe ausgelegt werden kann; die insgesamt erforderliche mechanische Festigkeit kann im wesentlichen durch die zweite Scheibe, die über die zumindest eine Stütze die erste Scheibe stützt, gewährleistet werden.

Eine günstige Weiterbildung des Wabenkörpers im Rahmen jedweder anderweitigen Ausgestaltung ist das Vorsehen einer zumindest teilweise elektrisch leitfähigen ersten Scheibe, in der ein Strompfad zur Durchleitung eines elektrischen Stromes für eine Beheizung gebildet ist und die über zumindest eine elektrisch isolierende Stütze gegen eine zweite Scheibe abgestützt ist. Im Rahmen dieser Weiterbildung wird ebenfalls von der Tatsache Gebrauch gemacht, daß die mechanische Festigkeit des Wabenkörpers durch eine von mehreren Scheiben bestimmt sein kann und andere Scheiben für andere Aufgaben, ohne Berücksichtigung besonderer Festigkeitsanforderungen, ausgelegt werden können. So ist es möglich, eine erste Scheibe weitgehend auf die Anforderungen für eine elektrische Beheizung abzustimmen und ihre Festigkeit z. B. dadurch zu gewährleisten, daß sie mittels isolierender, beispielsweise keramischer oder keramische Bestandteile aufweisende Stützen gegen eine die mechanische Festigkeit bestimmende zweite Scheibe abgestützt wird.

Im Rahmen einer anderen Weiterbildung weist der Wabenkörper jedweder Ausgestaltung zwei Scheiben auf, deren jede zumindest teilweise elektrisch leitfähig ist und die über zumindest eine elektrisch leitfähige Stütze gegeneinander abgestützt sind, wobei in dem Wabenkörper zumindest ein Strompfad zur Durchleitung eines elektrischen Stromes zum Zwecke der Beheizung gebildet ist, in welchen Strompfad sowohl die Scheiben als auch die Stütze einbezogen sind. Im Rahmen dieser Ausgestaltung wird die elektrisch leitfähige Stütze ausgenutzt, um den elektrischen Strom aus einer Scheibe in eine andere Scheibe zu leiten; damit wird eine Möglichkeit erschlossen, dem Wabenkörper elektrischen Strom an einer eine erste Scheibe berandenden Mantelfläche zuzuführen und an einer eine zweite Scheibe berandenden Mantelfläche wieder abzuführen. So kann bei einem elektrisch direkt beheizbaren Wabenkörper ein elektrischer Anschluß im Bereich nahe der Achse überflüssig sein; es ist auch möglich, auf elektrisch gegeneinander isolierte Unterteilungen der Mantelfläche, deren mechanisch hinreichend robuste Ausführung problematisch sein kann, zu verzichten. Erfindungsgemäß kann mit sehr einfachen Mitteln ein elektrisch beheizbarer Wabenkörper bereitgestellt werden, der einen elektrischen Widerstand in einer Größe hat, wie sie in Kraftfahrzeugen wünschenswert und vorteilhaft ist.

Unter einer "zumindest teilweise" elektrisch leitfähigen Scheibe wird eine Scheibe verstanden, die zu einem wesentlichen Teil elektrisch leitfähig ist, in die jedoch ggf. z. B. zum Zwecke der Einstellung des elektrischen Widerstandes auf eine vorgegebene Größe Isolierungen und/oder Spalte eingefügt sein können.

Eine weitere vorteilhafte Weiterbildung des Wabenkörpers, die vorzugsweise zusammen mit einer vorstehend beschriebenen Ausgestaltung realisiert wird, ist gekennzeichnet durch von Scheibe zu Scheibe verschiedene mittlere Querschnittsflächen der in den Scheiben liegenden Kanäle. Beispielsweise finden sich in einer ersten, dünneren Scheibe Kanäle mit größeren Querschnittsflächen als die Querschnittsflächen der Kanäle in einer zweiten, dickeren Scheibe. Große Querschnittsflächen der Kanäle bedeuten geringe Wärmekapazität, da weniger Material zur Bildung der Scheibe erforderlich ist, und eingeschränkte Wirksamkeit eines in den Kanälen befindlichen Katalysators. Eine Scheibe mit Kanälen von relativ großem Querschnitt ist daher besonders geeignet zur Anordnung vor einer anderen Scheibe, die durch Kanäle kleineren Querschnittes und hinreichend große Länge auf große Wirksamkeit ausgelegt ist; die verringerte Wirksamkeit des Katalysators in der Scheibe mit großen Querschnittsflächen gewährleistet eine verringerte Abnutzung, was zur Verlängerung der Gebrauchsdauer des Katalysators wesentlich beiträgt. Speziell dann, wenn eine erste, kleinere Scheibe die Aufheizung einer zweiten, größeren Scheibe unterstützen soll, ist die frühzeitige Abnutzung des auf der ersten Scheibe befindlichen Katalysators höchst unerwünscht, da mit dieser Abnutzung unmittelbar die zusätzliche Beheizung der zweiten Scheibe abnimmt. Die mit der Erfindung erschlossene Gestaltungsfreiheit erlaubt insbesondere die Einschränkung der katalytischen Wirksamkeit in einer kleineren Scheibe, die vor einer größeren Scheibe angeordnet ist, so daß in der kleineren Scheibe nicht mehr als etwa ein Viertel der in einem durchströmenden Fluid enthaltenen umsetzbaren Bestandteile umgesetzt wird. Die langfristige Wirksamkeit des Katalysators kann somit sichergestellt werden.

Zur Auslegung der Stütze in dem Wabenkörper gibt es mehrere Möglichkeiten. Es kann eine einzige Stütze vorgesehen sein, die vorteilhafterweise so angeordnet ist, daß sie von der Achse des Wabenkörpers durchdrungen wird; günstig kann es auch sein, in dem Wabenkörper mehrere, bezüglich der Achse etwa symmetrisch angeordnete Stützen vorzusehen.

Eine Stütze in dem Wabenkörper kann ihrerseits ein Wabenkörper sein, d. h. in der Stütze selbst können wie in anderen Bestandteilen des Wabenkörpers Kanäle liegen.

Die mehrteilige Struktur des Wabenkörpers kann z. B. bestimmt sein durch eine die Achse umlaufende Nut, wobei die Stütze ein von der Nut umgrenzter Teil des Wabenkörpers und jede Scheibe ein Teil des Wabenkörpers abseits der Nut ist. Eine solche Nut kann bereits bei der Herstellung eines metallischen Wabenkörpers gebildet werden, indem Bleche mit entsprechenden Schlitzen verwendet werden. Auch ist die Nut durch nachträgliche Bearbeitung in einen ursprünglich einstückigen Wabenkörper einzubringen. Solche nachträgliche Bearbeitung kann beispielsweise ein Dreh- oder Fräsvorgang sein.

Vorteilhafterweise ist ein Wabenkörper im Rahmen jedweder Ausgestaltung gebildet aus Metall, wobei jede Scheibe zumindest einen nach Art einer Spirale gewundenen Stapel mit zumindest einem Blech, insbesondere mit zumindest zwei unterschiedlich strukturierten Blechen, vorzugsweise mit zumindest einem glatten Blech und zumindest einem gewellten Blech, aufweist. Neben den Vorteilen des metallischen Aufbaus, die aus den zitierten Dokumenten des Standes der Technik hervorgehen, erlaubt ein aus Blechen gebildeter Wabenkörper auch eine einfache Realisierung der bereits geschilderten besonderen Ausgestaltungen. Insbesondere können die Segmente des Wabenkörpers unterschiedlich bemessen sein, wobei z. B. in verschiedenen Segmenten Kanäle mit voneinander abweichenden Querschnittsflächen realisiert sind; auch kann ein metallischer Wabenkörper durch eine einfache Nachbearbeitung eines ursprünglich einstückigen metallischen Wabenkörpers erhalten werden.

Die zumindest eine Stütze wird bei einem Wabenkörper mit metallischen Segmenten vorteilhafterweise ebenfalls im wesentlichen aus Metall gebildet; die Stütze kann ein einfacher Metallstab, ein Metallrohr oder ein aus zumindest einem, gegebenenfalls strukturierten, Blech gewundener, besonderer Wabenkörper sein.

Günstigerweise wird die Stütze in die Struktur jeder Scheibe einbezogen; insbesondere weist jede Scheibe zumindest einen um die Stütze gefalteten und/oder gewundenen Stapel aus zumindest einem Blech auf. Hierbei kann der Stapel in an sich bekannter Weise S-förmig um zwei voneinander beabstandete Stützen gewunden sein. Auch kann in einem Wabenkörper mit zumindest zwei voneinander beabstandeten Stützen jeder Stütze ein um diese gefalteter Stapel zugeordnet sein, wobei alle Stapel nach Art einer Spirale um die Stützen gewunden sind.

Wie bereits erwähnt, eignet sich ein metallischer Wabenkörper auch in besonderer Weise für eine direkte elektrische Beheizung, wenn in dem Wabenkörper zumindest ein Strompfad zur Durchleitung eines elektrischen Stromes gebildet ist.

In einem elektrisch leitfähigen Wabenkörper gemäß der Erfindung wird vorteilhafterweise zumindest eine Stütze elektrisch leitfähig ausgeführt, jede Scheibe erhält eine etwa axial ausgerichtete Mantelfläche und an jeder Mantelfläche wird ein Anschluß zur Ein- und/oder Ausspeisung eines elektrischen Stromes vorgesehen; dies in der Weise, daß jeder Anschluß sowie die elektrisch leitfähige Stütze in dem Strompfad liegt. So hat ein Wabenkörper mit zwei Scheiben an jeder Mantelfläche einen Anschluß; der elektrische Strom fließt in einer der Scheiben von dem Anschluß in der Mantelfläche zur Stütze, durch die Stütze hindurch in die andere Scheibe und dort von der Stütze zur Mantelfläche, wo er an dem dortigen Anschluß ausgespeist wird. Auf diese Weise gestattet die Erfindung die Bildung eines elektrisch beheizbaren Wabenkörpers, bei dem keine Anschlüsse im Inneren, insbesondere in der Nähe der Achse, erforderlich sind. Damit ermöglicht die Erfindung eine wesentliche Vereinfachung der Stromzuführung an einen elektrisch beheizbaren Wabenkörper und gestattet den Verzicht auf Stromzuführungen, die, was möglicherweise bedenklich ist, in achsennahe Bereiche des Wabenkörpers hineinführen müssen.

Neben einer elektrisch leitfähigen Stütze kann an einem Wabenkörper auch eine elektrisch isolierende Stütze vorgesehen werden; als solche kommt ein Stab oder dergleichen aus keramischer Masse in Frage, auch können Metall-Keramik-Verbundmaterialien Einsatz finden. Als Metall-Keramik-Verbundmaterial kommt beispielsweise ein keramisch beschichteter Metallstab in Frage; gegebenenfalls kann die Keramikschicht teilweise, unter Beibehaltung der Isolation, eine Metallhülse aufweisen. Ein solcher Metallstab mit Keramikbeschichtung und metallischer Hülse kann auch dazu dienen, in einem erfindungsgemäßen Wabenkörper mit drei oder mehr Scheiben einen komplizierten Strompfad zu bilden, was im Rahmen spezieller Anwendungen u. U. von Vorteil sein kann. Eine elektrisch isolierende Stütze kann auch eine von einer bis in eine andere Scheibe des Wabenkörpers ragende Isolierschicht sein, die in jeder Scheibe zwei Stapel voneinander isoliert. Auf diese Weise ist ein ganz besonders robuster Wabenkörper gebildet.

In spezieller Weiterbildung der Erfindung besteht zumindest eine Scheibe eines elektrisch leitfähigen Wabenkörpers aus zumindest zwei Stapeln, die gegeneinander elektrisch isoliert sind, und deren jeder um eine in dem Strompfad liegende elektrisch leitfähige Stütze gefaltet und gewunden ist. Die zwei Stapel sind auf diese Weise elektrisch in Reihe schaltbar, was zur Erhöhung des elektrischen Widerstandes des Wabenkörpers nützlich ist. Die Hintereinanderschaltung der zwei Stapel ist möglich über die Stützen, die über eine weitere Scheibe des Wabenkörpers, in oder an der die Stützen befestigt sind, elektrisch miteinander in Verbindung bringbar sind. Dies ist im einfachsten Fall dadurch bewerkstelligt, daß in der zweiten Scheibe überhaupt keine Isolierschichten liegen; es ist allerdings auch möglich, die zweite Scheibe ebenso wie die erste aus gegeneinander isolierten, um die elektrisch leitfähigen Stützen gefalteten und gewundenen Stapeln zu bilden und in der Mantelfläche der zweiten Scheibe elektrische Verbindungen, deren jede zwei Stapel miteinander verbindet, vorzusehen. Derart können alle Stapel, alle elektrisch leitfähigen Stützen und alle elektrischen Verbindungen in den Mantelflächen elektrisch in Reihe geschaltet werden; an zwei entsprechenden Anschlüssen kann dieser Wabenkörper mit einer elektrischen Spannungsquelle verbunden werden.

Als Isolierschicht in einem Wabenkörper kommt insbesondere eine keramische Isolierschicht, beispielsweise eine aus keramischen Fasern gebildete hatte oder dergleichen, in Frage. Auch sind voneinander beabstandete keramische Abstandshalter, die zwischen zwei Stapeln in einer Scheibe Luftspalte gewährleisten, denkbar.

Die weitere Erläuterung der Erfindung erfolgt anhand der in der Zeichnung dargestellten Ausführungsbeispiele. Die Zeichnung ist zur Verdeutlichung der spezifischen Merkmale der Erfindung teilweise schematisiert und/oder leicht verzerrt ausgeführt. Im einzelnen zeigen:
Figur 1 einen Längsschnitt durch einen erfindungsgemäßen Wabenkörper;
Figur 2 einen Querschnitt durch eine Scheibe des in Figur 1 dargestellten Wabenkörpers;
Figur 3 eine spezielle Ausführungsform einer Scheibe;
Figur 4 eine Skizze betreffend die Bildung der in Figur 3 dargestellten Scheibe;
Figur 6 eine Skizze des Strompfades in einem Wabenkörper;
Figur 7 eine skizzierte andere Ausführungsform des Strompfades;
Figur 8 den Querschnitt einer besonderen Ausführungsform einer Scheibe;
Figur 9 den Längsschnitt einer weiteren Ausführungsform des Wabenkörpers.

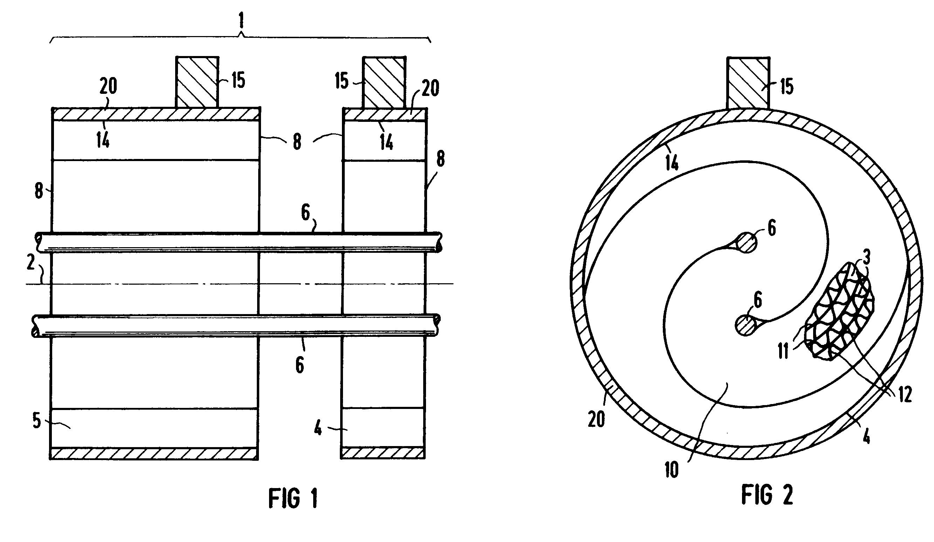

Figur 1 zeigt einen Wabenkörper 1, gebildet aus einer ersten Scheibe 4 und einer zweiten Scheibe 5 sowie zwei Stützen 6, die erste Scheibe 4 und zweite Scheibe 5 miteinander verbinden. Der Wabenkörper 1 besitzt eine Achse 2 und ist diesbezüglich weitestgehend rotationssymmetrisch ausgebildet. Jede Scheibe 4, 5 ist begrenzt durch eine axial orientierte Mantelfläche 14 sowie zwei senkrecht zur Achse 2 ausgerichtete Stirnflächen 8. Jede Scheibe 4, 5 ist eingesteckt in ein Mantelrohr 20. An jedem Mantelrohr 20 befindet sich ein Anschluß 15; durch die Anschlüsse 15 kann ein elektrischer Strom durch den Wabenkörper 1, der elektrisch leitfähig, z. B. metallisch, ist, zu dessen Beheizung geleitet werden. Eine elektrische Beheizung findet hauptsächlich in der ersten Scheibe 4 statt, da diese dünner als die zweite Scheibe 5 ist und dementsprechend einen deutlich höheren elektrischen Widerstand hat. In einem Abgassystem einer Brennkraftmaschine wird der Wabenkörper 1 vorteilhafterweise so angeordnet, daß von der Brennkraftmaschine kommendes Abgas zunächst die erste Scheibe 4 und dann die zweite Scheibe 5 durchströmt. Ein Katalysator in der ersten Scheibe 4 kann durch die elektrische Beheizung sehr schnell aktiviert werden und trägt somit durch die Aufheizung des zu der zweiten Scheibe 5 abströmenden Abgases zur beschleunigten Aufheizung dieser zweiten Scheibe 5 bei.

Figur 2 zeigt einen Querschnitt durch die erste Scheibe 4 des in Figur 1 dargestellten Wabenkörpers 1. Die erste Scheibe 4 besteht aus einem aus glatten Blechen 11 und gewellten Blechen 12 geschichteten Stapel 10, der nach Art eines S um die zwei Stützen 6 geschlungen ist. Zwischen glatten Blechen 11 und gewellten Blechen 12 sind Kanäle 3 gebildet, durch die Abgas oder ein anderes Fluid mit katalytisch umsetzbaren Bestandteilen strömen kann. Jedes glatte Blech 11 und jedes gewellte Blech 12 endet an der Mantelfläche 14 und ist dort mit dem Mantelrohr 20 verbunden, insbesondere hartverlötet. Der Anschluß 15 dient zur Ein- oder Ausspeisung eines elektrischen Stroms; dieser Strom durchquert die erste Scheibe 4 zu bzw. von den Stützen 6; diese Stützen 6 leiten den elektrischen Strom weiter zu einer anderen Scheibe des Wabenkörpers.

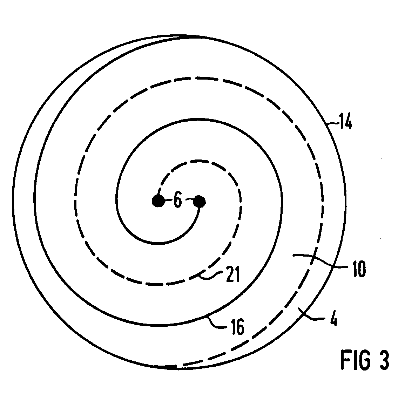

Figur 3 zeigt, starkt schematisiert und vereinfacht, eine Variante der in Figur 2 dargestellten ersten Scheibe 4, gebildet aus einem S-förmig verschlungenen Stapel 10. Gemäß Figur 3 ist in der Scheibe 4 eine Isolierschicht 16 vorgesehen, die einen radial gerichteten Stromfluß von der Mantelfläche 14 zu den Stützen 6 verhindert und somit den wirksamen elektrischen Widerstand der Scheibe 4 erhöht. Die Isolierschicht 16 ist, ausgehend von einer der Stützen 6, eingefügt zwischen aufeinanderliegende Windungen des Stapels 10. Ausgehend von der anderen Stütze 6 ist die Trennlinie 21 zwischen aufeinanderliegenden Windungen des Stapels 10 gezeigt; es ist in der Regel nicht erforderlich, daß ausgehend von beiden Stützen 6 Isolierschichten 16 vorgesehen werden - ausgeschlossen ist diese Möglichkeit jedoch nicht.

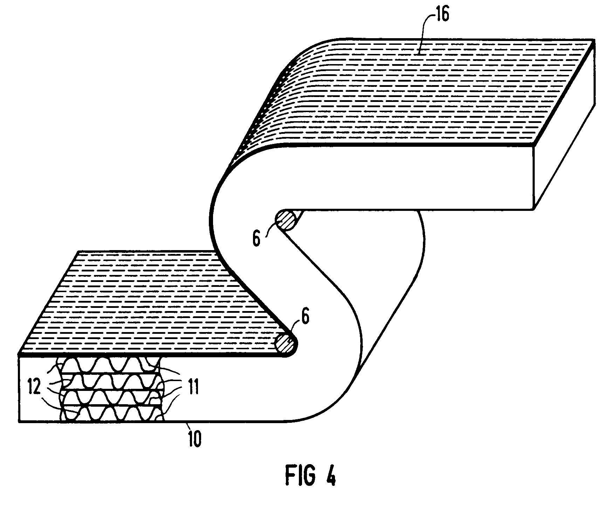

Figur 4 demonstriert, wie eine in Figur 3 dargestellte Scheibe 4 durch S-förmige Verschlingung eines Stapels 10 aus glatten Blechen 11 und gewellten Blechen 12 gebildet werden kann; der Stapel 10 wird zwischen zwei Stützen 6 gefaßt und um diese Stützen 6 herum verschlungen. Auf dem Stapel 10 ersichtlich ist eine Isolierschicht 16; diese kann eine keramische Beschichtung eines Bleches 11 des Stapels 10 sein, es kann sich auch um eine auf den Stapel 10 aufgelegte keramische Fasermatte oder dergleichen handeln.

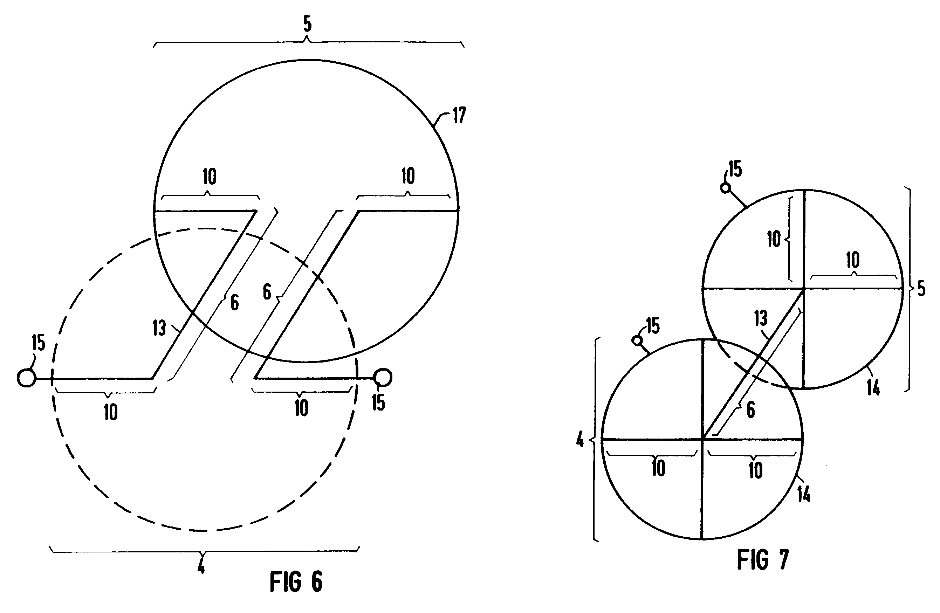

Die Figuren 6 und 7 zeigen, stark schematisiert, den Verlauf des Strompfades 13, den ein elektrischer Strom durch einen Wabenkörper gemäß der Erfindung nimmt. Angedeutet sind jeweils zwei Scheiben 4 und 5. In jeder Scheibe 4, 5 führt der Strompfad 13 von einer Mantelfläche 14 zu einer elektrisch leitfähigen Stütze 6, durch diese Stütze 6 hindurch in die jeweils andere Scheibe 4, 5, und dort über zumindest einen Stapel 10 zurück zur Mantelfläche 14. Gemäß Figur 6 erfolgt die Ein- und Ausspeisung des elektrischen Stroms an Anschlüssen 15, die beide an der ersten Scheibe 4 angeordnet sind; die zweite Scheibe 5 dient hauptsächlich dazu, eine Verbindung zwischen den beiden Stützen 6 herzustellen. Im dargestellten Beispiel erfolgt diese Verbindung über die Stapel 10 in der zweiten Scheibe 5 sowie über eine elektrische Verbindung 17, die in der dortigen Mantelfläche 14 zu denken ist - eine solche Verbindung 17 kann ein metallisches Mantelrohr, das u. U. gegen weitere Komponenten des Abgassystems, in dem der Wabenkörper sich befindet, zu isolieren ist, sein. Gemäß Figur 6 kann eine Beheizung sowohl der ersten Scheibe 4 als auch der zweiten Scheibe 5 realisiert werden. Sofern eine Beheizung der zweiten Scheibe 5 nicht gewünscht ist, kann die dortige Verbindung zwischen den beiden Stützen 6 durch die gesamte Scheibe 5 gebildet sein, wenn dort keine Isolierschichten vorhanden sind; eine besondere elektrische Verbindung 17 kann dabei u. U. entfallen. Gemäß Figur 7 wird der elektrische Strom der ersten Scheibe 4 an einem Anschluß 15 zugeführt, läuft von der Mantelfläche 14 durch die Stapel 10 und die Stütze 6 zur zweiten Scheibe 5, durchsetzt dort die Stapel 10 und wird an der dortigen Mantelfläche 14 an einem Anschluß 15 wieder abgenommen. Figur 7 zeigt damit die einfachste Möglichkeit zur Bildung eines Strompfades 13 in einem erfindungsgemäßen Wabenkörper; diese Möglichkeit ist auch in Figur 1 realisiert (allerdings sind dort zwei elektrisch parallel geschaltete Stützen 6 vorgesehen).

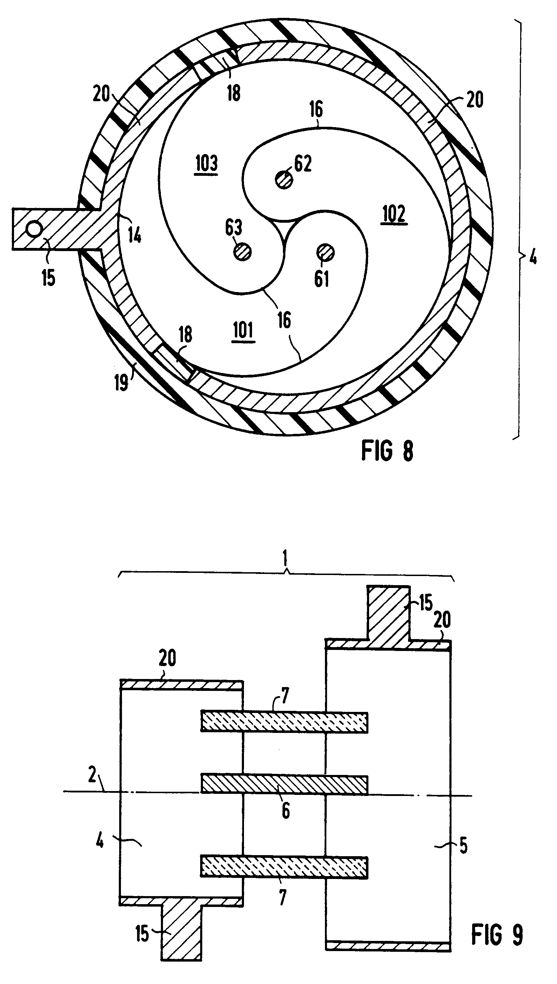

Figur 8 zeigt eine Scheibe 4 eines Wabenkörpers, mit drei Stapeln 101, 102, 103, deren jeder um eine Stütze 61, 62 bzw. 63 gefaltet ist, und die nach Art einer Evolvente um die drei Stützen 61, 62, 63 geschlungen sind. Die drei Stapel 101, 102 und 103 sind durch Isolierschichten 16 gegeneinander isoliert. Die Anordnung der Stapel 101, 102, 103 befindet sich in einem metallischen Mantelrohr 20, das allerdings nicht vollständig ist, sondern in das zwei Isolierstücke 18 in der Weise eingefügt sind, daß über das Mantelrohr 20 zwei Stapel 102 und 103 miteinander verbunden, von dem dritten Stapel 101 allerdings getrennt sind. Der mit dem Stapel 101 verbundene Teil des Mantelrohres 20 weist einen Anschluß 15 auf, durch den beispielsweise ein elektrischer Strom zugeführt werden kann. Die Scheibe 4 ist mit einer nicht dargestellten, gleichartigen zweiten Scheibe verbunden. Der elektrische Strom wird folgendermaßen geführt: Am Anschluß 15 wird der Strom eingespeist und fließt in den Stapel 101 und von dort durch die Stütze 61 in die zweite Scheibe. In dieser Scheibe, das ebenfalls durch Isolierschichten unterteilt sein muß, wird der Strom z. B. der Stütze 62 zugeleitet, durchquert diese und gelangt so zu dem Stapel 102. Aus diesem Stapel gelangt er über die durch das Mantelrohr 20 gegebene Verbindung in den Stapel 103 und von dort in die Stütze 63. Durch diese Stütze 63 fließt er erneut zu der zweiten Scheibe und ist dort an einem weiteren Anschluß auszuspeisen. In der Tat sind also die drei Stapel 101, 102 und 103 elektrisch in Reihe geschaltet, woraus sich ein relativ hoher elektrischer Widerstand ergibt. Ein solcher hoher elektrischer Widerstand ist bekanntermaßen für Heizzwecke vorteilhaft.

Figur 9 zeigt ein weiteres Ausführungsbeispiel für einen Wabenkörper 1 gemäß der Erfindung. Der Wabenkörper 1 hat zwei Scheiben 4 und 5, die bezüglich der Achse 2 hintereinander angeordnet sind. Beide Scheiben 4 und 5 sollen aus Blechen oder elektrisch leitfähiger Keramik gebildet sein. Zur Verbindung der Scheiben 4 und 5 miteinander sind eine elektrisch leitfähige Stütze 6 sowie zwei elektrisch isolierende Stützen 7 vorgesehen; alle Stützen 6, 7 sind, beispielsweise durch Hartlöten, mit den Scheiben 4 und 5 verbunden. Jede Scheibe 4, 5 ist eingeschlossen in ein Mantelrohr 20, und jedes Mantelrohr 20 weist einen Anschluß 15 zur Ein- oder Ausspeisung eines elektrischen Stromes auf.

Die Erfindung betrifft einen Wabenkörper, der entlang einer Achse von einem Fluid durchströmbar ist, indem das Fluid eine Vielzahl von Kanälen in dem Wabenkörper durchströmt. Der Wabenkörper weist zumindest zwei Scheiben auf, die voneinander beabstandet und bezüglich der Achse hintereinander angeordnet sind, und deren jede Kanäle hat, wobei die erste Scheibe eine geringere Wärmekapazität aufweist als die nach folgende Scheibe. Erfindungsgemäß ist zumindest eine nahe der Achse angeordnete Stütze vorgesehen, durch die die Scheiben untereinander verbunden und gegeneinander abgestützt sind. Die Erfindung gestattet es, eine erste Scheibe im Hinblick auf schnelle Aufheizbarkeit durch durchströmendes Abgas oder durchgeleiteten elektrischen Strom auszulegen und/oder die mechanische Festigkeit des Wabenkörpers im wesentlichen durch entsprechende Auslegung der zweiten Scheibe und der Stütze zu gewährleisten. Der erfindungsgemäße Wabenkörper ist besonders geeignet zu Verwendung als Träger für einen Katalysator im Abgassystem einer Brennkraftmaschine, beispielsweise in einem Kraftfahrzeug.

## Patentansprüche

1. Wabenkörper (1), der
a) entlang einer Achse (2) von einem Fluid durchströmbar ist, indem das Fluid eine Vielzahl von Kanälen (3) in dem Wabenkörper (1) durchströmt; wobei
der Wabenkörper (1)
b) zumindest zwei Scheiben (4, 5) aufweist, die voneinander beabstandet sind und bezüglich der Achse (2) hintereinander angeordnet sind, und deren jede Kanäle (3) hat;
c) und zumindest eine nahe der Achse (2) angeordnete Stütze (6, 7, 61, 62, 63) aufweist, durch die die Scheiben (4, 5) untereinander verbunden sind.
dadurch gekennzeichnet, daß die erste vom Fluid durchströmte Scheibe (4) eine geringere Wärmekapazität aufweist als die nachfolgende Scheibe (5).

2. Wabenkörper (1) nach Anspruch 1, der bezüglich der Achse (2) etwa axialsymmetrisch, insbesondere rotationssymmetrisch, ist.

3. Wabenkörper (1) nach Anspruch 1 oder 2, bei dem jede Scheibe (4, 5) durch zwei etwa senkrecht zu der Achse (2) ausgerichtete Stirnflächen (8) begrenzt ist.

4. Wabenkörper (1) nach einem der vorhergehenden Ansprüche, der eine erste Scheibe (4) und eine zweite Scheibe (5) aufweist, deren jede parallel zu der Achse (2) eine Dicke hat, wobei die Dicke der zweiten Scheibe (5) größer ist als die Dicke der ersten Scheibe (4).

5. Wabenkörper (1) nach einem der vorhergehenden Ansprüche mit einer zumindest teilweise elektrisch leitfähigen ersten Scheibe (4), in der ein Strompfad (13) zur Durchleitung eines elektrischen Stromes für eine Beheizung gebildet ist, und die über zumindest eine elektrisch isolierende Stütze (7) gegen eine zweite Scheibe (5) abgestützt ist.

6. Wabenkörper (1) nach einem der vorhergehenden Ansprüche mit zwei Scheiben (4, 5), die über zumindest eine elektrisch leitfähige Stütze (6) gegeneinander abgestützt sind und deren jede zumindest teilweise elektrisch leitfähig ist, in welchem Wabenkörper (1) zumindest ein Strompfad (13) zur Durchleitung eines elektrischen Stromes für eine Beheizung gebildet ist, in welchen Strompfad (13) die Scheiben (4, 5) und die Stütze (6) einbezogen sind.

7. Wabenkörper (1) nach einem der vorhergehenden Ansprüche, bei dem
a) jeder Scheibe (4, 5) eine mittlere Querschnittsfläche entsprechend dem Mittelwert von senkrecht zur Achse (2) liegenden Querschnittsflächen der Kanäle (3) der Scheibe (4, 5) zukommt;
b) die einer ersten Scheibe (4) zukommende mittlere Querschnittsfläche größer ist als die einer zweiten Scheibe (5) zukommende mittlere Querschnittsfläche.

8. Wabenkörper (1) nach einem der vorhergehenden Ansprüche, bei dem die Stütze (6, 7, 61, 62, 63) ihrerseits ein Wabenkörper ist.

9. Wabenkörper (1) nach einem der vorhergehenden Ansprüche, bei dem die Achse (2) die Stütze (6, 7, 61, 62, 63) durchdringt.

10. Wabenkörper (1) nach einem der vorhergehenden Ansprüche mit mehreren, bezüglich der Achse (2) etwa symmetrisch angeordneten Stützen (6, 7, 61, 62, 63).

11. Wabenkörper (1) nach einem der vorhergehenden Ansprüche, der mit zumindest einer die Achse (2) umlaufenden Nut (9) versehen ist, wobei die Stütze (6, 7, 61, 62, 63) ein von der Nut (9) umgrenzter Teil des Wabenkörpers (1) und jede Scheibe (4, 5) ein Teil des Wabenkörpers (1) abseits der Nut (9) ist.

12. Wabenkörper (1) nach einem der vorhergehenden Ansprüche, bei dem jede Scheibe (4, 5) zumindest einen nach Art einer Spirale gewundenen Stapel (10, 101, 102, 103) mit zumindest einem Blech (11, 12), insbesondere mit zumindest zwei unterschiedlich strukturierten Blechen (11, 12), vorzugsweise mit zumindest einem glatten Blech (11) und zumindest einem gewellten Blech (12), aufweist.

13. Wabenkörper (1) nach Anspruch 12, bei dem die Stütze (6, 7, 61, 62, 63) im wesentlichen aus Metall besteht.

14. Wabenkörper (1) nach Anspruch 13, bei dem die Stütze (6, 7, 61, 62, 63) aus zumindest einem Blech (11, 12) gewunden ist.

15. Wabenkörper (1) nach einem der Ansprüche 12 bis 14, bei dem jede Scheibe (4, 5) zumindest einen um die Stütze (6, 7, 61, 62, 63) gefalteten und/oder gewundenen Stapel (10, 101, 102, 103) aufweist.

16. Wabenkörper (1) nach Anspruch 15 mit zumindest zwei voneinander beabstandeten Stützen (6, 7, 61, 62, 63), bei dem jede Scheibe (4, 5) einen S-förmig um die Stützen (6, 7, 61, 62, 63) gewundenen Stapel (10, 101, 102, 103) aufweist.

17. Wabenkörper (1) nach Anspruch 15 mit zumindest zwei voneinander beabstandeten Stützen (6, 7, 61, 62, 63), bei dem in jeder Scheibe (4, 5) jeder Stütze (6, 7, 61, 62, 63) ein um diese gefalteter Stapel (10, 101, 102, 103) zugeordnet ist und alle Stapel (10, 101, 102, 103) nach Art einer Spirale gewunden sind.

18. Wabenkörper (1) nach einem der Ansprüche 12 bis 17, in dem zumindest ein Strompfad (13) zur Durchleitung eines elektrischen Stromes für eine Beheizung des Wabenkörpers (1) gebildet ist.

19. Wabenkörper nach Anspruch 18, bei dem
a) jede Scheibe (4, 5) von einer etwa axial ausgerichteten Mantelfläche (14) begrenzt ist;
b) zumindest eine Stütze (6, 61, 62, 63) elektrisch leitfähig ist;
c) an jeder Mantelfläche (14) ein Anschluß (15) zur Ein- und/oder Ausspeisung eines elektrischen Stromes vorliegt;
d) jeder Anschluß (15) und die elektrisch leitfähige Stütze (6, 61, 62, 63) in dem Strompfad (13) liegen.

20. Wabenkörper (1) nach Anspruch 18 oder 19, der zwischen zwei Scheiben (4, 5) zumindest eine elektrisch leitfähige Stütze (6, 61, 62, 63) und zumindest eine elektrisch isolierende Stütze (7) aufweist, wobei die elektrisch leitfähige Stütze (6, 61, 62, 63) in dem Strompfad (13) liegt.

21. Wabenkörper nach einem der Ansprüche 18 bis 20, bei dem zumindest eine Scheibe (4) aus zumindest zwei Stapeln (10, 101, 102, 103) besteht, die gegeneinander elektrisch isoliert sind, und deren jeder um eine in dem Strompfad (13) liegende elektrisch leitfähige Stütze (6, 61, 62, 63) gefaltet und gewunden ist.

22. Wabenkörper (1) nach Anspruch 21, in dem die Stapel (10, 101, 102, 103) durch zumindest eine Isolierschicht (16), insbesondere eine keramische Isolierschicht (16), gegeneinander isoliert sind.

23. Wabenkörper (1) nach Anspruch 21 oder 22, in dem
a) jede Scheibe (4, 5) aus zumindest zwei Stapeln (10, 101, 102, 103) besteht, die gegeneinander elektrisch isoliert sind, und deren jeder um eine elektrisch leitfähige Stütze (6, 61, 62, 63) gefaltet und gewunden ist;
b) jede elektrisch leitfähige Stütze (6, 61, 62, 63) einen Stapel (10, 101, 102, 103) in einer ersten Scheibe (4) mit einem Stapel (10, 101, 102, 103) in einer zweiten Scheibe (5) verbindet;
c) in der Mantelfläche (14) jeder Scheibe (4, 5) zumindest eine elektrische Verbindung (17) zwischen zwei Stapeln (10, 101, 102, 103) angeordnet ist;
d) alle Stapel (10, 101, 102, 103), alle elektrisch leitfähigen Stützen (6, 61, 62, 63) und alle elektrischen Verbindungen (17) elektrisch in Reihe geschaltet sind.

## Claims

1. A honeycomb body (1)
a) through which a fluid can flow along an axis (2) by the fluid flowing through a plurality of passages (3) in the honeycomb body (1); wherein
the honeycomb body (1)
b) has at least two discs (4, 5) which are spaced from each other and which are arranged one behind the other in relation to the axis (2) and each of which has passages (3);
c) and has at least one support (6, 7, 61, 62, 63) which is arranged near the axis (2) and by which the discs (4, 5) are connected together,
characterised in that the first disc (4) through which the fluid flows has a lower thermal capacity than the following disc (5).

2. A honeycomb body (1) according to claim 1 which, relative to the axis (2), is approximately axially symmetrical and in particular rotationally symmetrical.

3. A honeycomb body (1) according to claim 1 or claim 2 wherein each disc (4, 5) is defined by two end faces (8) which are directed perpendicularly to the axis (2).

4. A honeycomb body (1) according to one of the preceding claims which has a first disc (4) and a second disc (5), each of which has a thickness parallel to the axis (2), the thickness of the second disc (5) being greater than the thickness of the first disc (4).

5. A honeycomb body (1) according to one of the preceding claims with an at least partially electrically conductive first disc (4) in which a current path (13) is formed for carrying an electrical current for a heating means, and which is supported relative to a second disc (5) by way of at least one electrically insulating support (7).

6. A honeycomb body (1) according to one of the preceding claims having two discs (4, 5) which are supported relative to each other by way of at least one electrically conductive support (6) and each of which is at least partially electrically conductive, in which honeycomb body (1) at least one current path (13) is fold for carrying an electrical current for a heating means, the discs (4, 5) and the support (6) being included in the current path (13).

7. A honeycomb body (1) according to one of the preceding claims wherein
a) each disc (4, 5) has a mean cross-sectional area corresponding to the mean value of cross-sectional areas, which are perpendicular to the axis (2), of the passages (3) of the disc (4, 5); and
b) the mean cross-sectional area attributed to a first disc (4) is greater than the mean cross-sectional area attributed to a second disc (5).

8. A honeycomb body (1) according to one of the preceding claims wherein the support (6, 7, 61, 62, 63) is in turn a honeycomb body.

9. A honeycomb body (1) according to one of the preceding claims wherein the axis (2) passes through the support (6, 7, 61, 62, 63).

10. A honeycomb body (1) according to one of the preceding claims having a plurality of supports (6, 7, 61, 62, 63) which are arranged approximately symmetrically relative to the axis (2).

11. A honeycomb body (1) according to one of the preceding claims which is provided with at least one groove (9) extending around the axis (2), wherein the support (6, 7, 61, 62, 63) is a part of the honeycomb body (1) which is defined by the groove (9) and each disc (4, 5) is a part of the honeycomb body (1) away from the groove (9).

12. A honeycomb body (1) according to one of the preceding claims wherein each disc (4, 5) has at least one stack (10, 101, 102, 103), which is wound in the manner of a spiral, with at least one metal sheet (11, 12), in particular with at least two differently structured metal sheets (11, 12), preferably with at least one smooth metal sheet (11) and at least one corrugated metal sheet (12).

13. A honeycomb body (1) according to claim 12 wherein the supports (6, 7, 61, 62, 63) essentially comprise metal.

14. A honeycomb body (1) according to claim 13 wherein the support (6, 7, 61, 62, 63) is wound from at least one metal sheet (11, 12).

15. A honeycomb body (1) according to one of claims 12 to 14 wherein each disc (4, 5) has at least one stack (10, 101, 102, 103) which is wound and/or folded around the support (6, 7, 61, 62, 63).

16. A honeycomb body (1) according to claim 15 having at least two spaced-apart supports (6, 7, 61, 62, 63), wherein each disc (4, 5) has a stack (10, 101, 102, 103) which is wound in an S-shape around the supports (6, 7, 61, 62, 63).

17. A honeycomb body (1) according to claim 15 having at least two spaced-apart supports (6, 7, 61, 62, 63) wherein in each disc (4, 5) associated with each support (6, 7, 61, 62, 63) is a stack (10, 101, 102, 103) which is folded around same and all stacks (10, 101, 102, 103) are wound in the manner of a spiral.

18. A honeycomb body (1) according to one of claims 12 to 17 in which at least one current path (13) is formed for carrying an electrical current for a heating means for the honeycomb body (1).

19. A honeycomb body according to claim 18 wherein
a) each disc (4, 5) is defined by an approximately axially oriented peripheral surface (14);
b) at least one support (6, 61, 62, 63) is electrically conductive;
c) a connection (15) for feeding in and/or feeding out an electrical current is provided at each peripheral surface (14); and
d) each connection (15) and the electrically conductive support (6, 61, 62, 63) lie in the current path (13).

20. A honeycomb body (1) according to claim 18 or claim 19 which has between two discs (4, 5) at least one electrically conductive support (6, 61, 62, 63) and at least one electrically insulating support (7), wherein the electrically conductive support (6, 61, 62, 63) lies in the current path (13).

21. A honeycomb body according to one of claims 18 to 20 wherein at least one disc (4) comprises at least two stacks (10, 101, 102, 103) which are electrically insulated from each other and each of which is wound and folded around an electrically conductive support (6, 61, 62, 63) which lies in the current path (13).

22. A honeycomb body (1) according to claim 21 in which the stacks (10, 101, 102, 103) are insulated from each other by at least one insulating layer (16), in particular a ceramic insulating layer (16).

23. A honeycomb body (1) according to claim 21 or claim 22 in which
a) each disc (4, 5) comprises at least two stacks (10, 101, 102, 103) which are electrically insulated from each other and each of which is wound and folded around an electrically conductive support (6, 61, 62, 63);
b) each electrically conductive support (6, 61, 62, 63) connects a stack (10, 101, 102, 103) in a first disc (4) to a stack (10, 101, 102, 103) in a second disc (5);
c) arranged in the peripheral surface (14) of each disc (4, 5) is at least one electrical connection (17) between two stacks (10, 101, 102, 103), and
d) all stacks (10, 101, 102, 103), all electrically conductive supports (6, 61, 62, 63) and all electrical connections (17) are electrically connected in series.

## Revendications

1. Elément à nid d'abeilles (1),
a) qui peut être traversé le long d'un axe (2) par un fluide, le fluide traversant une multiplicité de canaux (3) dans l'élément à nid d'abeilles (1) ; selon lequel
l'élément à nid d'abeilles (1)
b) possède au moins deux disques (4, 5), qui sont à une certaine distance l'un de l'autre et qui sont agencés l'un derrière l'autre par rapport à l'axe (2), chacun ayant des canaux (3) ;
c) et possède au moins un support (6, 7, 61, 62, 63) agencé à proximité de l'axe (2), support grâce auquel les disques (4, 5) sont liés l'un à l'autre ;
caractérisé par le fait que le premier disque (4) traversé par le fluide présente une capacité thermique plus faible que le disque suivant (5).

2. Elément à nid d'abeilles (1) selon la revendication 1, qui est à peu près axisymétrique par rapport à l'axe (2), notamment symétrique par rotation.

3. Elément à nid d'abeilles (1) selon la revendication 1 ou 2, selon lequel chaque disque (4, 5) est limité par deux surfaces extérieures (8) orientées à peu près perpendiculairement à l'axe (2).

4. Elément à nid d'abeilles (1) selon l'une des revendications précédentes, qui possède un premier disque (4) et un deuxième disque (5), chacun ayant, parallèlement à l'axe (2), une épaisseur telle que l'épaisseur du deuxième disque (5) est plus grande que celle du premier disque (4).

5. Elément à nid d'abeilles (1) selon l'une des revendications précédentes, avec un premier disque (4), au moins partiellement électriquement conducteur, dans lequel un trajet de courant (13) est formé afin de conduire un courant électrique destiné à un chauffage, et qui est appuyé contre le deuxième disque (5) par l'intermédiaire d'au moins un support (7) électriquement isolant.

6. Elément à nid d'abeilles (1) selon l'une des revendications précédentes, avec deux disques (4, 5), qui sont appuyés l'un contre l'autre par l'intermédiaire d'au moins un support (6) électriquement conducteur et qui sont chacun au moins partiellement électriquement conducteurs, élément à nid d'abeilles (1) dans lequel au moins un trajet de courant (13) est formé afin de conduire un courant électrique destiné à un chauffage, trajet de courant (13) dans lequel les disques (4, 5) et le support (6) sont intégrés.

7. Elément à nid d'abeilles (1) selon l'une des revendications précédentes, selon lequel
a) on associe à chaque disque (4, 5) une aire moyenne de section en fonction de la moyenne des aires de section, situées perpendiculairement à l'axe (2), des canaux (3) des disques (4, 5) ;
b) l'aire moyenne de section, associée à un premier disque (4), est plus grande que celle associée à un deuxième disque (5).

8. Elément à nid d'abeilles (1) selon l'une des revendications précédentes, selon lequel le support (6, 7, 61, 62, 63) est, pour sa part, un élément à nid d'abeilles.

9. Elément à nid d'abeilles (1) selon l'une des revendications précédentes, selon lequel l'axe (2) traverse le support (6, 7, 61, 62, 63).

10. Elément à nid d'abeilles (1) selon l'une des revendications précédentes, avec plusieurs supports (6, 7, 61, 62, 63) agencés à peu près symétriquement par rapport à l'axe (2).

11. Elément à nid d'abeilles (1) selon l'une des revendications précédentes, qui est muni d'au moins une rainure (9) tournant autour de l'axe (2), le support (6, 7, 61, 62, 63) étant une partie, délimitée par la rainure (9), de l'élément à nid d'abeilles (1) et chaque disque (4, 5) étant une partie de l'élément à nid d'abeilles (1) à distance de la rainure (9).

12. Elément à nid d'abeilles (1) selon l'une des revendications précédentes, selon lequel chaque disque (4, 5) possède au moins un empilement (10, 101, 102, 103), enroulé à la façon d'une spirale, avec au moins une tôle (11, 12), en particulier avec au moins deux tôles (11, 12) de structure différente, de préférence avec au moins une tôle lisse (11) et au moins une tôle ondulée (12).

13. Elément à nid d'abeilles (1) selon la revendication 12, selon lequel le support (6, 7, 61, 62, 63) est constitué, pour l'essentiel, en métal.

14. Elément à nid d'abeilles (1) selon la revendication 13, selon lequel le support (6, 7, 61, 62, 63) est enroulé à partir d'au moins une tôle (11, 12).

15. Elément à nid d'abeilles (1) selon l'une des revendications 12 à 14, selon lequel chaque disque (4, 5) possède au moins un empilement (10, 101, 102, 103) plié et/ou enroulé autour du support (6, 7, 61, 62, 63).

16. Elément à nid d'abeilles (1) selon la revendication 15, avec au moins deux supports (6, 7, 61, 62, 63), à une certaine distance l'un de l'autre, selon lequel chaque disque (4, 5) possède un empilement (10, 101, 102, 103) enroulé en forme de S autour des supports (6, 7, 61, 62, 63).

17. Elément à nid d'abeilles (1) selon la revendication 15, avec au moins deux supports (6, 7, 61, 62, 63), à une certaine distance l'un de l'autre, selon lequel, dans chaque disque (4, 5), on associe à chaque support (6, 7, 61, 62, 63) un empilement (10, 101, 102, 103) plié autour de ce support et selon lequel tous les empilements (10, 101, 102, 103) sont enroulés à la façon d'une spirale.

18. Elément à nid d'abeilles (1) selon l'une des revendications 12 à 17, dans lequel un trajet de courant (13) est formé afin de conduire un courant électrique destiné à un chauffage de l'élément à nid d'abeilles (1).

19. Elément à nid d'abeilles selon la revendication 18, selon lequel
a) chaque disque (4, 5) est limité par une surface latérale (14) orientée à peu près de façon axiale ;
b) au moins un support (6, 61, 62, 63) est électriquement conducteur;
c) on trouve sur chaque surface latérale (14) une connexion (15) pour l'arrivée et/ou le départ d'un courant électrique ;
d) chaque connexion (15) et le support (6, 61, 62, 63) électriquement conducteur se trouvent sur le trajet du courant (13).

20. Elément à nid d'abeilles (1) selon la revendication 18 ou 19, qui possède, entre deux disques (4, 5), au moins un support (6, 61, 62, 63) électriquement conducteur et au moins un support (7) électriquement isolant, le support (6, 61, 62, 63) électriquement conducteur se trouvant sur le trajet du courant (13).

21. Elément à nid d'abeilles selon l'une des revendications 18 à 20, selon lequel au moins un disque (4) est constitué d'au moins deux empilements (10, 101, 102, 103) qui sont isolés électriquement l'un par rapport à l'autre et parmi lesquels chacun est plié et enroulé autour d'un support (6, 61, 62, 63) électriquement conducteur situé sur le trajet du courant (13).

22. Elément à nid d'abeilles (1) selon la revendication 21, dans lequel les empilements (10, 101, 102, 103) sont isolés l'un par rapport à l'autre par au moins une couche isolante (16), en particulier une couche isolante (16) en céramique.

23. Elément à nid d'abeilles (1) selon la revendication 21 ou 22, dans lequel
a) chaque disque (4, 5) est constitué d'au moins deux empilements (10, 101, 102, 103) qui sont isolés électriquement l'un par rapport à l'autre et parmi lesquels chacun est plié et enroulé autour d'un support (6, 61, 62, 63) électriquement conducteur;
b) chaque support (6, 61, 62, 63) électriquement conducteur relie un empilement (10, 101, 102, 103) dans un premier disque (4) avec un empilement (10, 101, 102, 103) dans un deuxième disque (5) ;
c) dans la surface latérale (14), on agence pour chaque disque (4, 5) au moins une liaison électrique (17) entre deux empilements (10, 101, 102, 103) ;
d) tous les empilements (10, 101, 102, 103), tous les supports (6, 61, 62, 63) conducteurs électriques et toutes les liaisons électriques (17) sont branchés électriquement en série.
